**Europäisches Patentamt**

**European Patent Office**

**Office européen des brevets**

(11) Publication number: **0 109 976**
**B1**

## (12) EUROPEAN PATENT SPECIFICATION

(45) Date of publication of patent specification: **07.01.88**

(21) Application number: **82111152.3**

(22) Date of filing: **02.12.82**

(51) Int. Cl.⁴: **H 01 F 1/10,** H 01 F 7/02, H 02 K 21/08

(54) **Cylindrical permanent magnet and manufacturing method of it.**

(43) Date of publication of application:
**13.06.84 Bulletin 84/24**

(45) Publication of the grant of the patent:
**07.01.88 Bulletin 88/01**

(84) Designated Contracting States:
**CH DE FR GB LI**

(56) References cited:
**CH-A- 428 967**
**FR-A-2 191 334**
**US-A-3 014 141**
**US-A-3 719 842**
**US-A-3 808 491**
**US-A-4 026 975**

(73) Proprietor: **Hitachi Metals, Ltd.**
**1-2, Marunouchi, 2-chome Chiyoda-ku**
**Tokyo 100 (JP)**

(72) Inventor: **Shimizu, Motoharu**
**519, Higashibeppu**
**Kumagaya (JP)**
Inventor: **Noda, Noriyuki**
**3717-6, Higashikata**
**Fukaya (JP)**
Inventor: **Noguchi, Yoshihiro**
**28, Shukune**
**Fukaya (JP)**

(74) Representative: **Strehl, Peter, Dipl.-Ing. et al**
**Strehl, Schübel-Hopf, Schulz Patentanwälte**
**Widenmayerstrasse 17 Postfach 22 03 45**
**D-8000 München 22 (DE)**

Courier Press, Leamington Spa, England.

0 109 976

**Description**

The present invention broadly relates to a magnet suitable for use as the rotor magnet of a stepping motor and, more particularly, to a cylindrical permanent magnet having a surface multipolar anisotropy.

In order to effect a multipolar magnetization on the surface of a permanent magnet, it is essential that the permanent magnet has a high coercive force and that the reversible magnetic permeability is around 1. To meet these demands, hitherto, ferrite magnets such as barium ferrite magnet, strontium ferrite magnet and so forth have been used as the permanent magnet for multipolar magnetization. Materials of such permanent magnets are stoichiometrically expressed by $MO \cdot 6Fe_2O_3$, where M represents an element such as Ba, Sr, Pb or their mixtures with or without bivalent metal such as Ca. Actually, however, the MO content is somewhat excessive so that the materials of such permanent magnets are expressed by $MO \cdot nFe_2O_3$, where n represents a value of 5 to 6.

Various cylindrical permanent magnets have been proposed and used hitherto, such as isotropic ferrite magnet, ring anisotropic ferrite magnet, and plastic magnets formed by dispersing ferrite magnetic powder in a matrix such as synthetic rubber, synthetic resin or natural rubber.

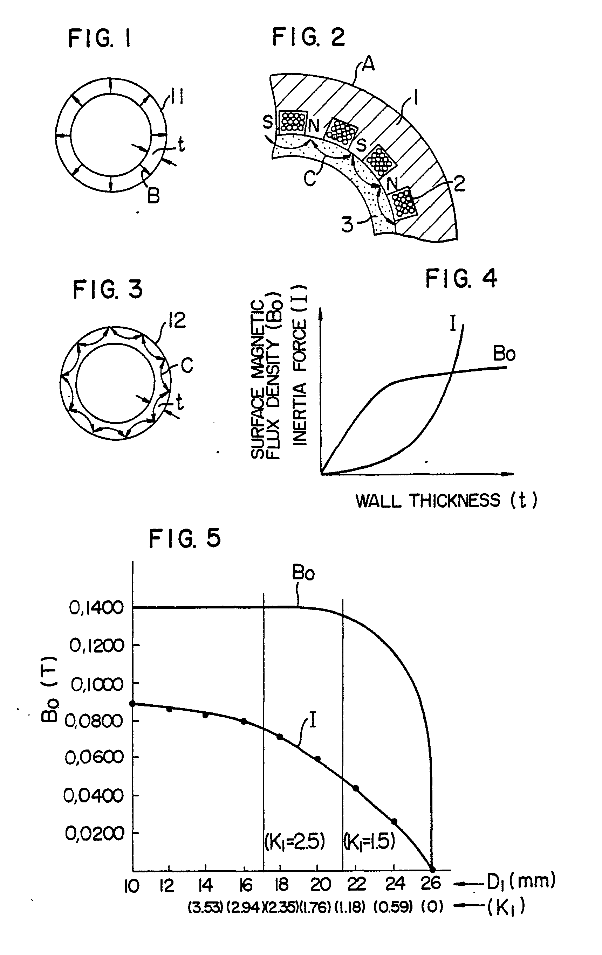

When imparting a plurality of magnetic poles arranged in the circumferential direction to the cylindrical surface of a cylindrical ceramic permanent magnet the radial anisotropy as shown in Fig. 1 is preliminarily imparted. This magnet is sintered and then magnetized by applying a magnetic field as it is shown in Fig. 2.

Magnets having such a radial anisotropy which is also called a ring anisotropy are described in the US—A—3114715, the US—A—4057606, the FR—A—2191334 and the CH—A—428967.

Magnets having a plurality of magnetic poles at their surface are furthermore disclosed in the US—A—3808491 and the US—A—3014141.

These known permanent magnets, however, suffer from various disadvantages as follows. Namely, the isotropic ferrite magnet, which is usually produced by compacting, cannot provide satisfactory magnetic properties, since magnetic particles are oriented in direction at random. The ring anisotropy magnet 11 as shown in Fig. 1 has a radial particle orientation as shown by arrows B. The magnetization after the sintering, however, is conducted by means of a magnetizing yoke A composed of a yoke member 1 formed of ferromagnetic material and coils 2 as shown in Fig. 2. Therefore, the direction of particle orientation and the direction of line of magnetic force indicated by arrows C locally discord with each other. Thus, the ring anisotropy magnet 11 cannot provide effective particle orientation. In the plastic permanent magnet 12 as shown in Fig. 3, the particle orientation coincides with the directions of lines of magnetic force indicated by arrow C. This plastic magnet 12, however, cannot provide sufficient amount of magnetic flux because of small residual magnetic flux density. Such plastic magnet is described in Japanese Laid-Open patent publication No. 57—130407.

In addition, the conventional cylindrical permanent magnet could not avert from the problem of large inertia force which is caused inevitably by increased wall thickness for obtaining high magnetic properties.

Accordingly, an object of the invention is to provide a multipolar surface magnetized magnet having a high surface magnetic flux density.

Another object of the invention is to provide a permanent magnet which exhibits a high holding torque when used as the rotor magnet of a stepping motor.

To these ends, according to the invention, there is provided a cylindrical permanent magnet sintered from a material having a composition expressed by $MO \cdot nFe_2O_3$, where M represents Ba, Sr, Pb or mixture thereof, while n being a value of 5 to 6, which is characterized in that a surface multipolar anisotropy of more than 8 (eight) poles is imparted to the cylindrical portion of said magnet.

The term "surface anisotropy" in this specification is used to mean such a state that magnetic poles of different polarities actually exists or are formable on the same surface of the permanent magnet such as the cylindrical outer peripheral surface, and easy axes of magnetization of ferrite particles, which have magneto-plumbite crystalline structure having unidirectional magnetic anisotropy, are substantially aligned with the lines, normally arcuate lines, interconnecting the magnetic poles through the body of the magnet.

The invention aims also at providing a cylindrical permanent magnet in which the particle orientation for attaining effective amount of magnetic flux is achieved in advance to the sintering thereby to impart the surface multipolar anisotropy while attaining high magnetic properties and a reduced inertia force.

Preferred embodiments of the magnet according to the present invention are subject matter of the patent claims 2 and 3.

Furthermore by the present invention a method of producing a cylindrical permanent magnet is provided comprising the steps of forming a cylindrical green body from a material consisting essentially of $Mo:nFe_2O_3$, where M represents Ba, Sr or Pb and n being value of 5 to 6 and containing 14 to 20% of water, subjecting the green body to multipolar magnetic fields to impart a surface multipolar anisotropy of more than 8 (eight) poles and then sintering the body.

Preferred embodiments of the method according to the present invention are subject matter of the patent claims 5 and 6.

These and other objects, features and advantages of the invention will become clear from the following decription of the preferred embodiments taken in conjunction with the accompanying drawings.

2

# 0 109 976

Fig. 1 shows the particle orientation in a conventional cylindrical permanent magnet;

Fig. 2 is an enlarged view of a part of permanent magnet and magnetizing yoke;

Fig. 3 is an illustration of the directions of lines of magnetic force in a permanent magnet;

Fig. 4 shows surface magnetic flux density and inertia force in relation to the wall thickness as observed in a cylindrical permanent magnet; and

Fig. 5 shows the surface magnetic flux density and inertia moment in relation to a change in the inside diameter of the cylindrical permanent magnet.

Description of the preferred embodiment

Generally, the multipolar cylindrical magnet for use as the rotor of a motor is required to satisfy both of the demands for high magnetic properties and low inertia force. These two demands, however, are generally incompatible with each other. If the wall thickness (t) of the cylindrical permanent magnet is increased for attaining a high surface magnetic flux density Bo, the inertia force I is increased undesirably, as will be understood from Fig. 4. To the contrary, if the wall thickness (t) is reduced to satisfy the requirement for smaller inertia force, the surface magnetic flux density is decreased unfavourably. Accordingly, it is necessary to optimize the size of the magnet so as to obtain sufficiently small inertia force without being accompanied by substantial reduction in the surface magnetic flux density Bo.

According to the invention, the inside and outside diameters of the cylindrical permanent magnet are selected to meet the following condition.

$$T=D_1/D_2=1-K_1/P(K_1 \geqq 1.5)$$

Where, $D_1$ represents the inside diameter of magnet, $D_2$ represents the outside diameter of permanent magnet, P represents the number of magnetic poles and $K_1$ represents a constant.

In the aforementioned formula, the inside to outside diameter ratio T ranges between 0 and 1.0. As the ratio gets closer to 1, the wall thickness (t) becomes smaller so that the surface magnetic flux density $B_0$ gets smaller. To the contrary, as the ratio T approaches 0 (zero), the wall thickness (t) gets larger to make the magnet resemble a pillar or solid cylinder, resulting in an increased inertia force I.

The right side of the aforementioned formula suggests that an increase in number of magnetic poles P causes an increase in the inside to outside diameter ratio T resulting in a reduced wall thickness (t). To the contrary, the wall thickness (t) is increased as the number P of magnetic poles is decreased. It is thus possible to obtain the optimum inside and outside diameters, i.e. the diameter ratio T, also on consideration of the number P of magnetic poles.

An explanation will be made hereinunder as to how the formula mentioned before is derived. As the outer peripheral surface of the cylindrical permanent magnet is magnetized to develop magnetic poles of a number P, the circumferential distance between adjacent magnetic poles, i.e. the distance along the outer peripheral surface of the cylindrical magnet between the centers of adjacent magnetic poles of different polarities, is expressed by $D_2/P$. The penetration depth of the magnetic flux is then expressed by $K_1 D_2/P$, where the constant $K_1$ is determined experimentally as explained later. Since the wall portion of thickness range un-penetrate by the magnetic flux does not constitute essential part of the cylindrical permanent magnet, the effective inside diameter $D_1$ of the magnet is expressed as follows.

$$D_1=D_2-K_1 D_2/P$$

The following formula is derived by dividing both sides of the above formula by $D_2$.

$$D_1/D_2=1-K_1/P$$

The optimum ratio T between the inside diameter and the outside diameter of the cylindrical permanent magnet of the invention is determined by this formula.

An explanation will be made hereinunder as to an example of experimental determination of the constant value $K_1$, with specific reference to Fig. 5. Namely, Fig. 5 shows how the surface magnetic flux density $B_0$ and the inertia moment I are changed in accordance with changes in the inside diameter $D_1$ and the constant value $K_1$, in a cylindrical permanent magnet having an outside diameter $D_2$ of 26 mm and 24 (twenty four) magnetic poles in total. From this Figure, it will be seen that a specifically high surface magnetic density is obtained when the constant $K_1$ takes a value not smaller than 1.5. Considering that the smaller inertia force ensures higher performance of rotor magnet, the constant value $K_1$ is selected to meet the condition of $1.5 \leqq K_1 \leqq 2.5$.

The cylindrical permanent magnet of the invention is formed from a material containing, in addition to the major constituents mentioned before, a suitable amount of additives for imparting a self-supporting force, as well as 14 to 20% of water for permitting the rotation of particles when the material is placed under the influence of a magnetic field. Then, formed body is placed under the influence of the magnetic field to orientate the particles in the direction of lines of magnetic force, and is then sintered to become the permanent magnet as the final product. The magnet, if desired, is machined to a final shape.

The water content is selected to range between 14 and 20% because any water content below 14%

3

**0 109 976**

makes the compacted body too hard to permit smooth orientation of particles for attaining desired anisotropy, resulting in an imperfect magnetic properties, while a water content in excess of 20% seriously deteriorates the self-supporting force of the compacted body to make the forming materially impossible.

To apply pulse magnetic fields to the compacted body, the coil of the yoke may be connected to an instantaneous D.C. power supply, wherein an A.C. power source is used as an input and the A.C. current is rectified and raised to a predetermined D.C. voltage to charge a group of capacitors which effect discharge through thyristors.

With respect to the magnitude of the pulse magnetic field, a magnetic field of over about $8.10^5$ A/m is enough to accomplish this invention. Not only one but a combination of two pulse magnetic fields may be applied.

An experimental example of the invention will be described hereinunder.

(Experiment)

A green body having an outside diameter, inside diameter and axial length of 33 mm, 23 mm and 30 mm, respectively, were formed by a compressing machine from a material consisting of powdered Sr ferrite ($SrO \cdot 5.6Fe_2O_3$) containing 18% of water. The green body was inserted into a multipolar magnetizing yoke A as shown in Fig. 2 and was subjected to a magnetic field of more than $2,4.10^5$ A/m. The green body was then sintered at 1200°C following 24 hour drying. The sintered body was machined to have an outside diameter, inside diameter and axial length of 26 mm, 18 mm and 20 mm, respectively. The body 3 was then magnetized by a multipolar magnetizing yoke having a shape similar to the magnetizing yoke A shown in Fig. 2, and the surface magnetic flux density $B_o$ was measured, the result of which is shown in Table 1 below together with the values obtained with a conventional isotropic magnet, ring anisotropic magnet and a plastic magnet by way of reference.

TABLE 1

|  | Surface magnetic flux density $B_o$ (T) |
| --- | --- |
| isotropic magnet | 0,0500 |
| ring anisotropic magnet | 0,1000 |
| plastic magnet | 0,1000 |
| magnet of invention | 0,1400 |

As will be understood from Table 1 above, the permanent magnet of the invention has attained about 40% increase in the surface magnetic flux density as compared with conventional magnets. The cylindrical permanent magnet of the invention used in this experiment had an outside diameter, inside diameter and axial length of 26 mm, 18 mm and 20 mm, respectively, and had 24 (twenty four) magnetic poles in total. In addition, the constant value $K_1$, is selected to range between 1.5 and 2.5 in view of the curve shown in Fig. 5, so that the size of the permanent magnet is optimized to provide a reduced inertia force without being accompanied by substantial reduction in the surface magnetic flux density.

Using the permanent magnets shown in Table 1 as the rotors of the stepping motor, an experiment was conducted by applying a DC voltage of 12V to confirm the holding torques produced by these magnets, the result of which is shown in Table 2 below together with the magnetic properties of these permanent magnets.

TABLE 2

|  | Holding torque (g · cm) | Magnetic properties | |
| --- | --- | --- | --- |
|  |  | Br(T) | Hc(A/m) |
| isotropic magnet | 660 | 0,2000 | $1,35.10^5$ |
| ring anisotropic magnet | 720 | 0,3200 | $2,15.10^5$ |
| plastic magnet | 700 | 0,3000 | $2,0.10^5$ |
| magnet of invention | 900 | 0,2600 | $2,4.10^5$ |

4

Since the magnetic properties were all measured in the radial direction, the magnet of the invention exhibits quite a low residual induction Br of $2,1.10^5$ A/m. This magnet, however, exhibits quite a high holding torque.

As has been described, the cylindrical permanent magnet of the invention is provided with the surface multipolar anisotropy prior to the sintering so that the particles are oriented in the magnetizing direction. The sintered permanent magnet of the invention, therefore, has an extremely high surface magentic flux density which in turn permits a high magnetic properties. In addition, since the size of the magnet is optimized in view of the formula mentioned before, the weight and, hence, the inertia force of the magnet is decreased advantageously as compared with conventional magnets, without being accompanied by any substantial decrease in the magnetic properties. The reduced weight permits also an economical use of the material.

Although a specific embodiment applied to a rotor magnet of stepping motor has been explained, the described embodiment is not exclusive and various changes and modifications are possible without departing from the scope of the invention. For instance, the cylindrical permanent magnet of the invention may have an increased axial length so that it may be used in a copying machine incorporating a magnetic brush development for latent images.

## Claims

1. A cylindrical permanent magnet sintered from a material having a composition expressed by $MO \cdot nFe_2O_3$, where M represents Ba, Sr, Pb or mixture thereof, while n being a value of 5 to 6, characterized in that a surface multipolar anisotropy of more than 8 (eight) poles is imparted to the cylindrical portion of said magnet.

2. A cylindrical permanent magnet according to claim 1, wherein the inside diameter $D_1$ and the outside diameter $D_2$ of the cylindrical portion of said magnet are determined to meet the following condition:

$$D_1/D_2 = 1 - K_1 \pi/P$$

where $K_1$ represents a constant which is not smaller than 1.5, and P represents the number of magnetic poles.

3. A cylindrical permanent magnet according to claim 2, wherein said constant $K_1$ is selected to meet the following condition:

$$1.5 \leqq K_1 \leqq 2.5.$$

4. A method of producing a cylindrical permanent magnet comprising the steps of forming a cylindrical green body from a material consisting essentially of $MO \cdot nFe_2O_3$, where M represents Ba, Sr or Pb and n being a value of 5 to 6, and containing 14 to 20% of water, subjecting the green body to multi-polar magnetic fields to impart a surface multipolar anisotropy of more than 8 (eight) poles, and then sintering the body.

5. A method of producing a cylindrical permanent magnet according to claim 4, wherein the inside diameter $D_1$ and the outside diameter $D_2$ of the cylindrical portion of the sintered body are selected to meet the following condition:

$$D_1/D_2 = 1 - K_1 \pi/P$$

where, $K_1$ represents a constant value not smaller than 1.5, and P represents the number of magnetic poles, said sintered body being magnetizised at its surface to develop a multiplicity of magnetic poles.

6. A method of producing a cylindrical permanent magnet according to claim 5, wherein said constant value $K_1$ is selected to meet the condition of $1.5 \leqq K_1 \leqq 2.5$.

## Patentansprüche

1. Zylindrischer Permanentmagnet, der durch Sintern aus einem Material mit der Zusammensetzung $MO \cdot nFe_2O_3$ hergestellt ist, wobei M Ba, Sr, Pb oder eine Mischung davon repräsentiert und n ein Wert zwischen 5 und 6 ist, dadurch gekennzeichnet, daß dem zylindrischen Teil des Magneten eine multipolare Oberflächenanisotropie mit mehr als acht Polen verliehen ist.

2. Zylindrischer Permanentmagnet nach Anspruch 1, bei dem der Innendurchmesser $D_1$ und der Außendurchmesser $D_2$ des zylindrischen Teils des Magneten so festgelegt sind, daß die folgende Bedingung erfüllt wird:

$$D_1/D_2 = 1 - K_1 \pi/P,$$

wobei $K_1$ eine Konstante darstellt, die nicht kleiner als 1,5 ist, und P die Anzahl der Magnetpole ist.

3. Zylindrischer Permanentmagnet nach Anspruch 2, bei dem die Konstante $K_1$ so gewählt ist, daß die Gleichung

$$1,5 \leqq K_1 \leqq 2,5$$

erfühllt.

4. Verfahren zum Herstellen eines zylindrischen Permanentmagneten, bei dem ein zylindrischer Grünling aus einem Material gebildet wird, das im wesentlichen aus $MO \cdot nFe_2O_3$ besteht, wobei M Ba, Sr oder Pb repräsentiert und n ein Wert zwischen 5 und 6 ist, und das 14 bis 20% an Wasser enthält, der Grünling multipolaren magnetischen Feldern ausgesetzt wird, um ihm eine multipolare Oberflächenanisotropie mit mehr als acht Polen zu verleihen, und dann der Grünling gesintert wird.

5. Verfahren zur Herstellung eines zylindrischen Permanentmagneten nach Anspruch 4, bei dem der Innendurchmesser $D_1$ und der Außendurchmesser $D_2$ des zylindrischen Teils des Sinterkörpers so gewählt werden, daß die folgende Bedingung erfüllt wird:

$$D_1/D_2 = 1 - K_1\pi/P$$

wobei $K_1$ eine Konstante darstellt, die nicht kleiner als 1,5 ist, und P die Anzahl der Magnetpole repräsentiert, und wobei der Sinterkörper an seiner Oberfläche magnetisiert ist, so daß er eine Anzahl von Magnetpolen entwickelt.

6. Verfahren zum Herstellen eines zylindrischen Permanentmagneten nach Anspruch 5, bei dem die Konstante $K_1$ so gewählt wird, daß die Bedingung $1,5 \leqq K_1 \leqq 2,5$ erfüllt wird.

**Revendications**

1. Un aimant permanent cylindrique fritté à partir d'un matériau ayant une composition exprimée par $MO.nFe_2O_3$, où M représente Ba, Sr, Pb ou un mélange de ceux-ci, alors que n est une valeur de 5 à 6, caractérisé par le fait qu'une anisotropie de surface multipôlaire de plus de 8 (huit) pôles est donnée à la portion cylindrique dudit aimant.

2. Un aimant permanent cylindrique d'après la revendication 1, dans lequel le diamètre intérieur $D_1$ et le diamètre extérieur $D_2$ de la portion cylindrique dudit aimant sont déterminés pour satisfaire à la condition suivante:

$$D_1/D_2 = 1 - K_1\pi/P$$

où $K_1$ représente une constante qui n'est pas inférieure à 1,5 et P représente le nombre des pôles.

3. Un aimant permanent cylindrique d'après la revendication 2, dans lequel ladite constante $K_1$ est choisie pour satisfaire à la condition suivante:

$$1,5 \leqq K_1 \leqq 2,5$$

4. Une méthode de production d'un aimant permanent cylindrique comprenant les étapes de formation d'un corps vert cylindrique à partir d'un matériau consistant essentiellement en $MO.nFe_2O_3$, où M représente Ba, Sr, ou Pb et n est une valeur de 5 à 6, et contenant de 14 à 20% d'eau, de soumission du corps vert à des champs magnétiques multipôlaires pour donner une anisotropie de surface multipôlaire de plus de 8 (huit) pôles, et ensuite, de frittage du corps.

5. Une méthode de production d'un aimant permanent cylindrique d'après la revendication 4, dans laquelle le diamètre intérieur $D_1$ et le diamètre extérieur $D_2$ de la portion cylindrique du corps fritté sont choisis pour satisfaire à la condition suivante:

$$D_1/D_2 = 1 - K_1\pi/P$$

où $K_1$ représente une valeur constante non inférieure à 1,5 et P représente le nombre des pôles, ledit corps fritté étant magnétisé à sa surface pour développer une multiplicité de pôles magnétiques.

6. Une méthode de production d'un aimant permanent cylindrique d'après la revendication 5, dans lequel ladite valeur constante $K_1$ est choisie pour satisfaire à la condition $1,5 \leqq K_1 \leqq 2,5$.

FIG. 1

FIG. 2

FIG. 3

FIG. 4

SURFACE MAGNETIC
FLUX DENSITY (Bo)
INERTIA FORCE (I)

I

Bo

WALL THICKNESS ( t )

FIG. 5

Bo

0,1400

0,1200

0,1000

0,0800

0,0600

0,0400

0,0200

Bo (T)

I

(K₁=2.5) (K₁=1.5)

10  12  14  16  18  20  22  24  26 ── D₁ (mm)

(3.53)(2.94)(2.35)(1.76)(1.18)(0.59)(0) ── (K₁)

1